# EUROPEAN PATENT APPLICATION

(11) **EP 4 718 357 A1**
(43) Date of publication of application: **01.04.2026**
(21) Application number: 25204515.8
(22) Date of filing: 25.09.2025
(51) Int. Cl.: G06Q 10/20, G02B 27/01, G02C 11/04, G06F 1/16

(54) **SYSTEM FOR REMOTE TECHNICAL ASSISTANCE IN REAL TIME**

(30) Priority: 25.09.2024 IT 202400021332
(71) Applicant: Digitalmens S.r.l., 80046 San Giorgio a Cremano (NA) (IT)
(72) Inventor: DI FIORE, Giuseppe, I-80046 San Giorgio a Cremano (NA) (IT)
(74) Representative: Fiammenghi, Eva

(57) **Abstract**

System for remote technical assistance in real time adapted to comprise a plurality of elements suitable for showing, to a remote control unit, the objects observed by an operator engaged in maintenance interventions, simplifying any type of intervention, whether ordinary or extraordinary; said system being suitable for sending the collected information to the smartphone of the operator, via a wireless connection; all the information being then shared with said control unit via an internet connection provided by the smartphone; this system being therefore suitable for putting the operator in communication with the specialized staff located remotely, allowing the staff to create references and tags on the video received in streaming from the operator, simplifying any type of communication.

## Description

### Field of the invention

The invention relates to an innovative system that is able to provide assistance for maintenance and/or remote support interventions in various areas, in real time, through various features which facilitate communication and information sharing between operators in the field and technicians at remote locations.

### Prior art

To date, the lack of communication between field operators and control centers represents an extremely significant problem, with potentially serious implications in many areas, both industrial and in emergency contexts. This communication gap can pose significant safety risks, as timely and accurate information is critical to managing emergency situations, such as industrial accidents, natural disasters, or rescue operations. If a field operator fails to quickly transmit critical information to the control center, the response may be delayed or inadequate, resulting in damage to people, infrastructure, and the environment.

Furthermore, a lack of effective communication compromises operational efficiency, as decisions may be made without up-to-date information, potentially slowing down processes, executing operations incorrectly, and increasing costs. In industrial settings, for example, such inefficiencies translate into reduced productivity and potential damage to machinery or production interruptions.

Another critical aspect concerns the coordination of operations. The continuous flow of information between operators and the control center is essential to ensure that activities run smoothly. In the absence of such coordination, overlapping work or contradictory interventions may occur, which hinder the achievement of the established objectives.

The control center's ability to make informed decisions depends largely on the data and updates provided by field operators. Without a constant flow of information, decisions may be based on incomplete or outdated data, compromising the effectiveness of operations and increasing the risk of errors.

From a psychological point of view, the lack of communication support from the control center may generate a sense of isolation and insecurity among field operators, with negative consequences on their performance. This state of discomfort may increase the risk of human error, reducing operator motivation and morale.

The legal implications of the lack of communication are also significant. In the event of incidents or malfunctions attributable to communication inefficiencies, investigations may highlight gaps in protocols, exposing the parties involved to legal disputes and liability.

The lack of communication between operators and control centers therefore constitutes a complex problem today with potentially devastating consequences. To mitigate these risks, it is necessary to invest in advanced communication technologies, develop clear and redundant protocols, and ensure continuous training for all operators involved.

Nowadays, interactive glasses have been introduced on the market, which are able to communicate with monitoring centers.

However, these glasses are too expensive to be adopted in industrial quantities, without considering their fragility when subjected to extreme situations.

For this reason, smart glasses are not particularly widespread today, leaving the problem of lack of communication still an open issue.

Even patent US2024231110, published on July 11, 2024, fails to address the aforementioned issues, as it claims a lens for application to a pair of "smart" glasses which may optimize the view of objects for virtual interactions; such invention does not address the issue of the impracticality of "smart" glasses in the industrial sector.

It is therefore deemed that it is necessary today to provide a system which acts as a middle ground between obsolete protective masks and science fiction "smart" glasses to simplify the interventions of operators, who must be monitored by specialized personnel located in the control centers.

The object of our patent application is therefore to provide assistance for all maintenance and support interventions, using a system which may be controlled remotely in real time, through various functions that facilitate communication and information sharing between remote technicians and operators in the field.

### Description of the invention

According to the present invention, a system for remote technical assistance in real time is provided, which effectively solves the above drawbacks.

Said system, in fact, represents a major innovation in the maintenance and remote support sector in general, allowing for real-time assistance, improving the efficiency and precision of interventions thanks to advanced communication and information-sharing features, using tags anchored to the objects in the frame, ensuring high accuracy in the execution of instructions received from a control center.

The present system therefore allows the operator to carry out maintenance work hands-free, receiving complete step-by-step instructions.

This system allows images of the objects viewed by the operator/wearer to be transmitted to a remote control unit, thus simplifying any type of maintenance or extraordinary intervention. The information collected by the system is sent, via a wireless connection, to the operator's smartphone and then shared with the control center via a standard internet connection.

The system includes a mount, used by operators working in sensitive environments, where errors of judgment or inexperience can cause serious damage. This mount, in addition to being suitable for housing various system components, has LED lights to indicate the operating status of the entire system, such as the charge of the integrated battery and the correct data connection of the system to the operator's smartphone.

Said mount also includes a battery inside, which is necessary to power all the components.

By way of non-limiting example, said battery is designed to be removed to allow for quick replacement; alternatively, again by way of example, said battery is designed to be recharged wirelessly, in order to allow the same battery to be reused on multiple occasions, further simplifying the internal structure of such base.

A camera is positioned to the side of the mount, with the aim of recording the operator's actions and transmitting the images in real time to the control center. Such camera may also be used underwater thanks to its hermetic seal protection.

By way of non-limiting example, the images and information recorded by he said camera are designed to be saved internally to the base using a common SD card, in order to minimize the exchange of sensitive information online, when required.

Once the control center receives the operator's images, text messages may be sent, which the operator may view via an integrated screen which overlays the mask's lenses; such text messages are essential in noisy environments where audio would not be sufficient to ensure clear communication.

The system subject of the present invention also includes an audio system positioned at the rear of the mount, above the operator's ears, with speakers and microphones that facilitate communication between the operator and the control center, further creating an immersive environment for both parties, which is advantageous in confusing situations.

An internal processor, also included in the mount, works with the integrated screen to overlay additional information on the streaming video captured by the camera, allowing the operator to view tags drawn by the control center, which highlight specific objects and provide precise instructions for all interventions, step by step.

In one embodiment, said processor can be controlled by a common application for smartphones, which is able to contain the instructions necessary to carry out a certain type of interventions, showing the operator, in a completely offline manner, the steps to be performed. The system is designed to communicate with the operator's smartphone, via an integrated wireless connection, in order to use such smartphone as a communication bridge for the transmission of data and videos relating to the intervention being performed.

By way of non-limiting example, said wireless connection is designed to connect to any router installed nearby, in order to send the camera's streaming data directly to said remote control center.

In one embodiment, this system provides for the presence of a plurality of attachment systems, necessary to attach said mount to any frame of glasses, in order to make the latter interfaceable with the aforementioned control center.

The advantages offered by the present invention are clear in the light of the above description and will be even more apparent from the accompanying figures and the detailed description.

### Description of the figures

The invention will be described hereinafter in at least a preferred embodiment by way of non-limiting example with the aid of the accompanying figures, in which:
- FIGURE 1 shows a perspective view of the system which is the subject of the invention, showing the plurality of components included on said frame 13 used by operators during maintenance or extraordinary intervention operations.
- FIGURE 2 shows the way in which the mount 13 is designed to communicate with the control unit 17 to exchange information regarding the intervention carried out by the operator.

### Detailed description of the invention

The present invention will now be described purely by way of non-limiting or binding example with the aid of the figures, which illustrate some embodiments related to the present inventive concept.

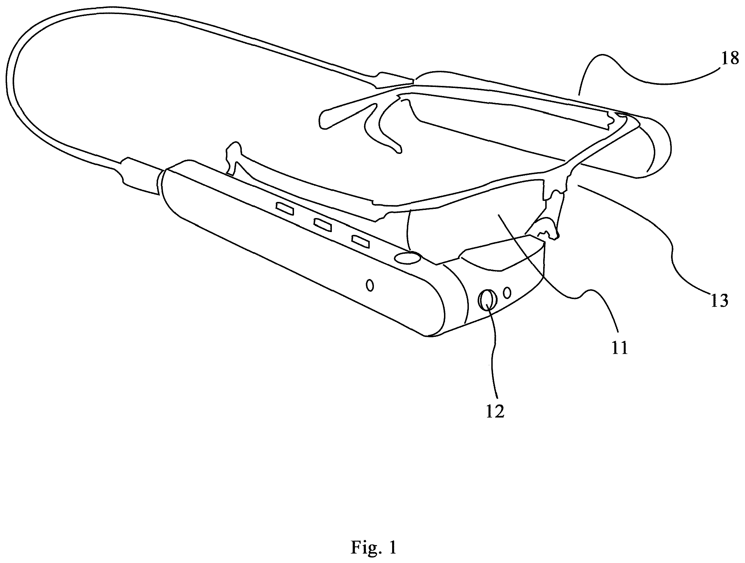

With reference to FIG. 1, it shows the construction of the mount 13, which is designed to allow the streaming transmission of images and sounds present around the operator, using a camera 12 and a plurality of microphones and speakers.

A processor is adapted to process the collected data and send it to the control unit 17 which, in return, is adapted to provide the plurality of instructions necessary to perform a successful maintenance intervention, thanks to the use of a special integrated screen 11 which is reversibly removable, which is adapted to display tags, which have the purpose of highlighting the objects that the operator must handle, as indicated by the control unit 17.

Said integrated screen 11 is adapted to be removed if the operator prefers to carry out the intervention without using the virtualization provided.

On said screen 11, drawings and documents necessary to simplify the operator's operations may be further displayed.

A battery 18 is installed laterally to said mount 13, in order to power all the digital components present, further stabilizing said mount 13, which would otherwise be unbalanced due to its asymmetry.

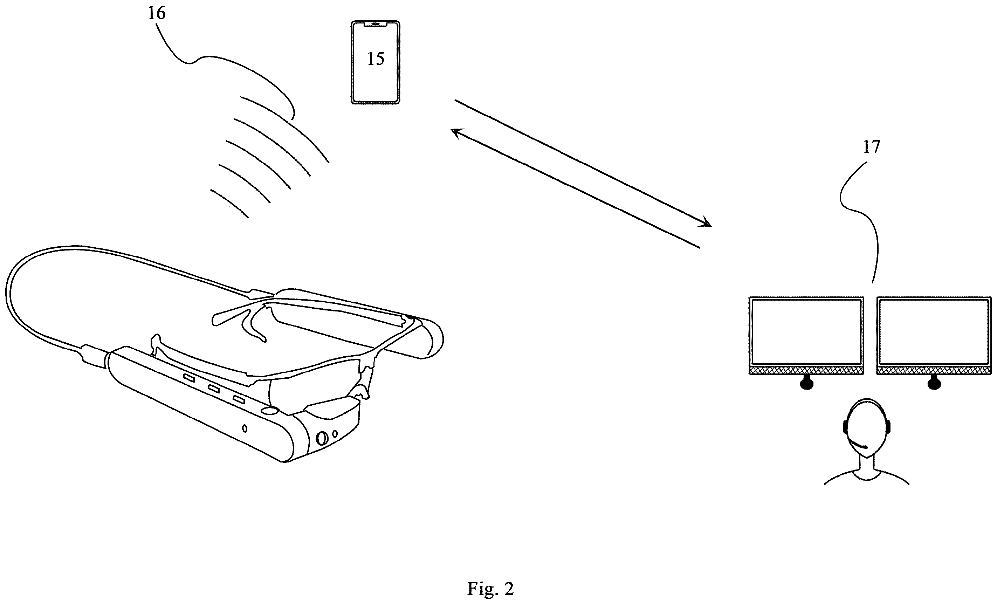

With reference to FIG. 2, it shows the technique for transmitting and sharing data collected by the present system which is the object of the invention.

More specifically, the mount 13 is adapted to send images and information to the operator's smartphone 15, using a common wireless connection 16.

Said smartphone 15, through its internet connection, is subsequently adapted to send the same collected information to the remote control unit 17.

If a router were available, the mount 13 would be adapted to send the collected information directly to the control center 17, bypassing the use of the operator's smartphone 15.

At this point, the information is processed and a team of remotely positioned experts is able to provide support to the operator involved in the intervention.

If it is necessary to work offline, for reasons of convenience or confidentiality, all the instructions given by control unit 17 may be previously uploaded to a dedicated app, which is able to provide each instruction only after the previous step has been correctly executed. Finally, it is clear that modifications, additions or variations that are obvious to a person skilled in the art may be made to the invention described so far, without thereby departing from the scope of protection provided by the appended claims.

## Claims

1. System for remote technical assistance in real time **characterized in that** it comprises a plurality of elements suitable for showing, to a remote control unit (17), the objects observed by an operator engaged in maintenance interventions, simplifying any type of intervention, whether ordinary or extraordinary; said system being suitable for sending the collected information to the smartphone (15) of the operator, via a wireless connection (16); all the information being then shared with said control unit (17) via an internet connection provided by the smartphone (15); this system being therefore suitable for putting the operator in communication with the specialized staff located remotely, allowing the staff to create references and tags on the video received in streaming from the operator, simplifying any type of communication; said system comprising:
- at least one said mount (13), on which all the components necessary to allow communication between the operator and the control unit (17) are attached; said mount (13) comprising a plurality of LED lights suitable for explaining the operating modes of the system, verifying that the relevant integrated battery is charged and the components are correctly connected to the operator's smartphone (15);
- at least one said battery (18), integrated laterally on said mount (13), suitable for providing the necessary voltage to all the components included in this system;
- at least a camera (12), installed in front of said mount (13), therefore in correspondence with the operator's temple, suitable for recording the actions undertaken by the operator, showing the images in real time to the aforementioned control unit (17); said camera (12) being suitable for being further immersed in water, thanks to the simple application of a protection equipped with an airtight seal;
- at least an integrated lens (11), linked to said mount (13), suitable for allowing the sending and reading of text messages, useful for the operator in noisy environments;
- at least a lighting system, installed in correspondence with said camera (12), suitable for allowing the lighting of the areas where the intervention is carried out by the operator, in order to help the operator by further transmitting images with sufficient brightness;
- at least an audio system, arranged on the rear portion of said mount (13), therefore above the operator's ears; said audio system comprising speakers and microphones, useful for allowing communication between the operator and the control unit (17), creating an immersive atmosphere for both the operator and the personnel present in the remote-control unit (17);
- at least a processor, installed internally to said mount (13) and suitable for collaborating with said integrated lens (11), in order to add information in overlay to the video streaming captured by the camera in real time; said processor allowing the operator to view tags drawn by the control unit (17), which have the purpose of unequivocally highlighting objects, in order to provide precise instructions, identifying the points on which the operator will have to intervene step by step;
- at least a wireless connection (16), capable of putting this system in communication with the operator's smartphone (15), which can act as a bridge for the transmission of data and videos relating to the intervention carried out by the operator.

2. System for remote technical assistance in real time, according to the preceding claim 1, **characterized in that** said battery (18) is removable to allow for its rapid replacement.

3. System for remote technical assistance in real time, according to the preceding claim 1, **characterized in that** said battery (18) is rechargeable wirelessly, to allow the reuse of the same battery (18) on multiple occasions, further simplifying the internal structure of said mount (13).

4. System for remote technical assistance in real time, according to any of the preceding claims, **characterized in that** said mount (13) comprises an SD card suitable for saving the images and information recorded by said camera (12).

5. System for remote technical assistance in real time, according to any of the preceding claims, **characterized in that** said processor can be controlled by a specific application for smartphones, which is able to contain the instructions necessary to carry out a certain type of interventions, showing the operator, in a completely offline manner, the steps to be performed.

6. System for remote technical assistance in real time, according to any of the preceding claims, **characterized in that** said wireless connection (16) can connect to any router installed nearby, to send the streaming data of the camera (12) directly to said remote control unit (17).

7. System for remote technical assistance in real time, according to any of the preceding claims, **characterized in that** it provides a plurality of attachment systems to bind the frame (13) to any frame of glasses, to make the latter interfaceable with the aforementioned control unit (17).
